# EUROPÄISCHE PATENTANMELDUNG

(11) **EP 0 908 659 A2**
(43) Veröffentlichungstag der Anmeldung: **14.04.1999**
(21) Anmeldenummer: 98116388.4
(22) Anmeldetag: 29.08.1998
(51) Int. Cl.: F16L 37/14

(54) **Fluid-Steckverbindung und Fluid-Rohrleitungselement**

(30) Priorität: 10.10.1997 DE 29718150 U
(71) Anmelder: Dürr Dental GmbH & Co. KG, 74321 Bietigheim-Bissingen (DE)
(72) Erfinder: Dürrstein, Peter, 74321 Bietigheim-Bissingen (DE)
(74) Vertreter: Ostertag, Reinhard

(57) **Zusammenfassung**

Eine Fluid-Steckverbindung umfaßt zwei Steckverbinderteile (10, 12), die jeweils einen Verbindungsabschnitt (20, 34) aufweisen. Ein äußerer Verbindungsabschnitt (34) übergreift formschlüssig einen inneren Verbindungsabschnitt (20). In ihm ist ein Verriegelungsteil (46) geführt, welches mit Verriegelungsarmen (42) in eine Verriegelungsnut (26) eingreift, die im inneren Verbindungsabschnitt (20) ausgebildet ist. In eine Dichtungsnut (22) des inneren Verbindungsabschnittes (20) ist eine mit der Innenfläche des äußeren Verbindungsabschnittes (34) zusammenarbeitende Dichtung (24) eingesetzt.

## Beschreibung

Die Erfindung betrifft eine Fluid-Steckverbindung gemäß dem Oberbegriff des Anspruches 1 sowie ein Rohrleitungselement, welches unter Verwendung von Steckverbinderteilen einer solchen Steckverbindung hergestellt ist.

Üblicherweise werden zum Verbinden von Schläuchen Steckverbinderteile benutzt, die jeweils einen mit einem Schlauchende verbindbaren Anschlußabschnitt und einen Verbindungsabschnitt aufweisen. Die Verbindungsabschnitte zweier zusammenarbeitender Steckverbinderteile sind zueinander komplementär, und zwischen den beiden Steckverbinderteilen wirkt eine Flachdichtung, die beim Zusammenfügen der Steckverbindungen, z.B. beim Zusammenschrauben derselben unter Spannung gesetzt wird und damit dichtet.

Durch die vorliegende Erfindung soll eine derartige Fluid-Steckverbindung geschaffen werden, welche sich besonders einfach Lösen und Schließen läßt.

Diese Aufgabe ist erfindungsgemäß gelöst durch eine Steckverbindung mit den im Anspruch 1 angegebenen Merkmalen.

Bei der erfindungsgemäßen Steckverbindung ist die Dichtung in einer Dichtungsnut angeordnet, die in einer der einander gegenüberliegenden Mantelflächen der beiden formschlüssig zusammenarbeitenden Verbindungsabschnitte der beiden Steckverbinderteile angeordnet ist. Diese Dichtung steht bei getrennten Steckverbinderteilen über die Außenfläche des sie tragenden Verbindungsabschnittes über und wird beim Zusammenstecken der Steckverbindung in radialer Richtung zusammengepreßt. Zum dichten Verbinden ist somit ein axiales Zusammenstecken der Steckverbindung ausreichend.

Vorteilhafte Weiterbildungen der Erfindung sind in Unteransprüchen angegeben.

Die Weiterbildung der Erfindung gemäß Anspruch 2 ist im Hinblick auf ein einfaches Austauschen und leichte optische Kontrolle der Dichtung von Vorteil.

Mit der Weiterbildung der Erfindung gemäß Anspruch 3 wird ein axiales Verblocken der beiden Steckverbinderteile bei geschlossener Steckverbindung erhalten. Die Steckverbindung bleibt somit auch bei Ausüben von axialen Zugkräften zuverlässig dicht.

Bei einer Steckverbindung gemäß Anspruch 4 erfolgt das Verriegeln in zur Steckverbinderachse symmetrischer Weise. Damit werden Kippmomente von der Steckverbindung durch die Verriegelungseinrichtung ferngehalten.

Die Weiterbildung der Erfindung gemäß Anspruch 5 ist im Hinblick auf ein einfaches Sichern des Verriegelungsteiles auf der Steckverbindung von Vorteil.

Die Weiterbildung der Erfindung gemäß Anspruch 6 ist im Hinblick auf ein im Bedarfsfalle einfaches Entfernen des Verriegelungsteiles von Vorteil.

Mit der Weiterbildung der Erfindung gemäß Anspruch 7 wird eine besonders präzise Positionierung des Verriegelungsteiles erhalten.

Die Weiterbildung der Erfindung gemäß Anspruch 8 ist im Hinblick auf ein leichtes Aufrasten und Abnehmen des Verriegelungsteiles von Vorteil, sorgt zusätzlich aber auch für besonders guten Kraftschluß zwischen den Verriegelungsarmen und der Verriegelungsnut.

Auf der Basis der erfindungsgemäßen Steckverbinderteile lassen sich auch starre Rohrleitungselemente herstellen, die leicht durch Zusammenstecken zu Leitungen gewünschter Geometrie zusammengefügt werden können.

Nachstehend wird die Erfindung anhand von Ausführungsbeispielen unter Bezugnahme auf die Zeichnung näher erläutert. In dieser zeigen:
- Figur 1:: einen axialen Schnitt durch eine Schlauchverbindung;
- Figur 2:: einen transversalen Schnitt durch Verbindungsabschnitte der in Figur 1 gezeigten Steckverbindung längs der dortigen Schnittlinie II-II;
- Figur 3:: einen axialen Schnitt durch ein Gerad-Rohrleitungselement, welches zusammen mit anderen gleichen oder ähnlichen Rohrleitungselementen eine Fluid-Rohrleitung bilden kann; und
- Figur 4:: eine ähnliche Ansicht wie Figur 3, in welcher jedoch ein Winkel-Rohrleitungselement dargestellt ist.

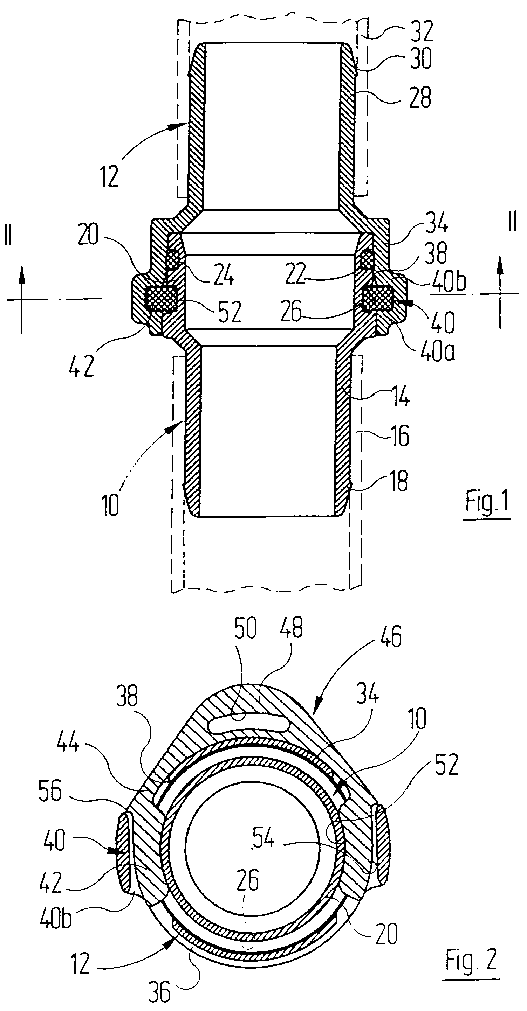

In Figur 1 sind mit 10 und 12 zwei zusammenarbeitende komplementäre Steckverbinderteile einer Schlauch-Steckverbindung dargestellt.

Das untenliegende Steckverbinderteil 10 hat einen Anschlußabschnitt 14, der als Stutzen ausgebildet ist und zum Aufschieben eines gestrichelt bei 16 dargestellten Schlauches dient. Eine Halterippe 18 sichert den Schlauch zusammen mit einer nicht dargestellten ihn umgebenden Schlauchklemme am Abrutschen vom Anschlußabschnitt 14.

Der Anschlußabschnitt 14 trägt seinerseits einen erweiterten Verbindungsabschnitt 20, in dessen zylindrische Außenfläche in der Nachbarschaft des freien Endes des Verbindungsabschnittes 20 eine Dichtungsnut 22 eingeformt ist. In dieser findet ein Dichtring 24 Aufnahme, z.B. ein O-Ring.

Axial von der Dichtungsnut 22 in Richtung zum Anschlußabschnitt 14 beabstandet ist in der Außenfläche des Verbindungsabschnittes 20 eine Verriegelungsnut 26 eingeformt.

Das Steckverbinderteil 12 hat einen in der Figur 1 obenliegenden Anschlußabschnitt 28, der mit einer beim freien Ende liegenden Halterippe 30 versehen ist und zur Aufnahme eines Schlauches 32 dient, der wiederum nur gestrichelt angedeutet ist und durch einen nicht dargestellte Schlauchklemme zusätzlich gesichert ist.

Mit dem in der Zeichnung unten liegenden Ende des Anschlußabschnittes 28 ist ein Verbindungsabschnitt 34 verbunden. Dieser hat becherförmige Gestalt und übergreift mit seiner innenliegenden Mantelfläche formschlüssig die Außenfläche des Verbindungsabschnittes 20.

In die Außenfläche des Verbindungsabschnittes 34 ist eine Positioniernut 36 eingeformt. Diese steht über zwei einander gegenüberliegende Fenster 38, die aus Figur 2 ersichtlich sind, mit dem Innenraum des becherförmigen Verbindungsabschnittes 34 in Verbindung.

Im Bereich der Fenster 38 sind an die Außenseite des Verbindungsabschnittes 34 zwei Führungslaschen 40 angeformt.

In die Fenster 38 sind in Figur 2 von oben nach unten zwei einander diametral gegenüberliegende Verriegelungsarme 42 eingeführt, die über dazwischenliegende Biegeabschnitte 44 zu einem insgesamt mit 46 bezeichneten Verriegelungsteil zusammengefügt sind. Bei seiner Mitte hat das Verriegelungsteil 46 einen Greifabschnitt 48, der mit einer Durchbrechung 50 versehen ist, an welcher ein Werkzeug zum Ziehen des Verriegelungsteiles 46 angesetzt werden kann.

Wie aus Figur 1 gut ersichtlich nehmen die Innenflächen seitlicher Schenkel 40a und 40b der Führungslaschen 40 die Stirnflächen der Verriegelungsarme 42 in Gleitspiel zwischen einander auf. Damit sind die Verriegelungsarme 42 sowohl in ihrem radial innenliegenden Abschnitt axial festgelegt (durch die Wände der Verrieglungsnut 26) als auch in ihrem radial außenliegenden Abschnitt axial festgelegt (durch die Schenkel 40a und 40b) und verkanten somit auch bei Ausüben großer Zugkräfte auf die Steckverbindung nicht, obwohl die Verriegelungsarme elastisch radial bewegbar sind und die sie tragenden Biegeabschnitte 44 kleineren Querschnitt aufweisen müssen und daher etwas tordierbar sind.

Damit sind die Steckverbinderteile 10 und 12 einfach und rasch verbindbar und trennbar, und gleichzeitig hält die Steckverbindung auch großen axialen Belastungen stand.

Wie aus Figur 2 ersichtlich, können die Fenster 38 zusammen mit den Führungslaschen 40 beim Spritzen dadurch hergestellt werden, daß man von der Seite her einen entsprechenden zweiarmigen Schieber in die Spritzform einführt.

Wie ebenfalls aus Figur 2 ersichtlich, haben die Verriegelungsarme 42 eine radial innenliegende Begrenzungsfläche 52, deren Krümmungsdurchmesser dem Außendurchmesser des Verbindungsabschnittes 20 entspricht. Eine außenliegende Begrenzungsfläche 54 der Verriegelungsarme 42 verläuft im wesentlichen gemäß dem Außendurchmesser des Verbindungsabschnittes 34 und unter Abstand von der Innenfläche der Führungslaschen 40, so daß die Verriegelungsarme 42 unter elastischer Verformung der Biegeabschnitte 44 radial nach außen federn können, wenn das Verriegelungsteil 46 in Figur 2 nach oben aus den Steckverbinderteilen 10, 12 herausgezogen wird.

In ihrem in Figur 2 obenliegenden Abschnitt ihrer Außenfläche haben die Verriegelungsarme 42 jeweils eine Anschlagnase 56, die mit der Seitenfläche einer zugeordneten Führungslasche zusammen einen Anschlag bildet.

Die Steckverbinderteile 10, 12 sind einstückige Plastikspritzteile, die z.B. fasergefüllte Duroplaste sein können. Auch das Verriegelungsteil 46 ist ein Kunststoffspritzteil. Für das Verriegelungsteil wird vorzugsweise aber eine Thermoplast mit gutem Federvermögen verwendet.

In der Zeichnung ist die Schlauch-Steckverbindung im geschlossenen Zustand gezeigt. Zum Öffnen wird das Verriegelungsteil 46 in Figur 2 nach oben aus den Fenstern 38 herausgezogen. Damit ist die axiale Verriegelung zwischen den beiden Steckverbinderteilen 10, 12 aufgehoben, und unter Überwindung der von dem komprimierten Dichtring 24 auf der Innenfläche des Verbindungsabschnittes 34 erzeugten Reibungskraft kann man die beiden Steckverbinderteile 10, 12 in axialer Richtung auseinanderziehen.

Das Schließen der oben beschriebenen Schlauch-Steckverbinder erfolgt in umgekehrter Richtung wie das Öffnen: Zunächst wird das innere Steckverbinderteil 10 in das äußere Steckverbinderteil 12 geschoben, bis die Stirnfläche des Steckverbinderteiles 10 am Boden des becherförmigen Verbindungsabschnittes 34 anschlägt. In dieser Stellung fluchtet dann die Verriegelungsnut 26 mit der Positioniernut 36 und den im Verbindungsabschnitt 34 vorgesehenen Fenstern 38. Das Verriegelungsteil 46 kann nun unter elastischer Aufweitung in die Fenster 38 und in die Verriegelungsnut 26 geschoben werden, wobei es mit den gebogenen Begrenzungsflächen der Verriegelungsarme 42 auf dem Boden der Verriegelungsnut 26 aufrastet. Da die Dicke des Verriegelungsteiles 46 der Breite der Verriegelungsnut 26 entspricht, sind nun die beiden Steckverbinderteile 10, 12 spielfrei in axialer Richtung verriegelt.

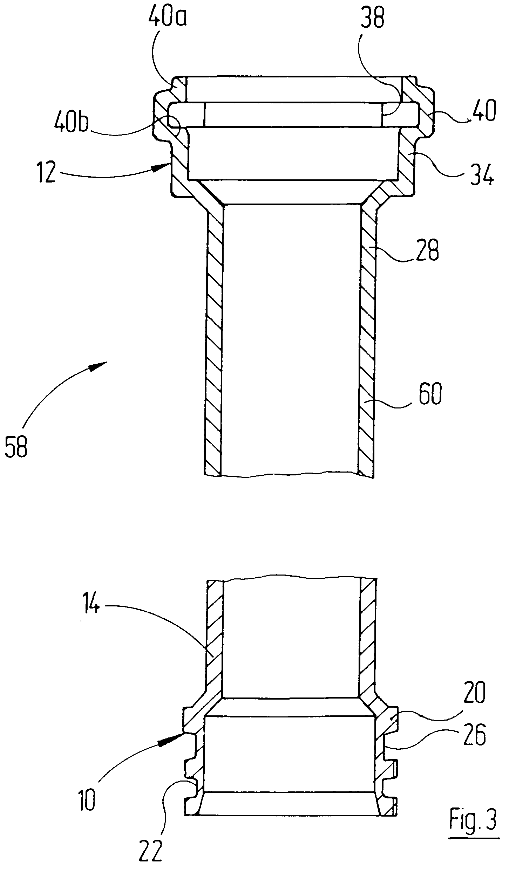

Figur 3 zeigt ein geradliniges Rohrleitungselement 58, bei dem ein Rohrstück 60 an seinem einen Ende mit einem inneren Steckverbinderteil 10 und an seinem anderen Ende mit einem äußeren Steckverbinderteil 12 versehen ist. Das Rohrleitungselement 58 kann mit weiteren derartigen Rohrleitungselementen zu einem längeren geradlinigen Rohrleitungsstück verbunden werden, indem die entsprechenden Enden der Rohrleitungselemente zusammengesteckt und jeweils durch ein Verriegelungsteil 46 gesichert werden.

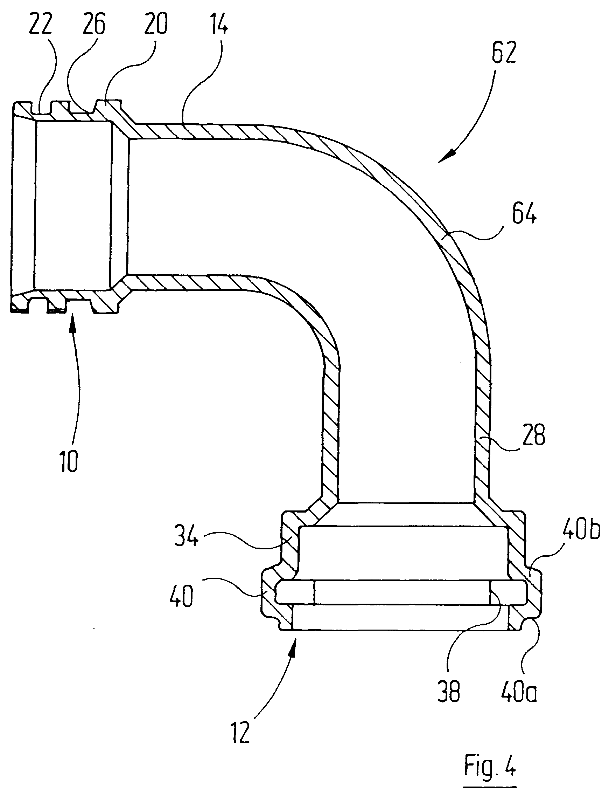

Figur 4 zeigt ein Rohrleitungselement 62, das analog aufgebaut ist wie das oben stehend unter Bezugnahme auf Figur 3 beschriebene, jedoch anstelle des Rohrstückes 60 einen Krümmer 64 enthält.

Es versteht sich, daß man analog zu den in den Figuren 3 und 4 gezeigten Rohrleitungselementen auch T-Stücke und andere Verzweigungsstücke herstellen kann, auch Übergangsstücke von einem Rohrleitungsdurchmesser auf einen anderen.

## Patentansprüche

1. Fluid-Steckverbindung mit einem ersten Steckverbinderteil (10), welches einen Anschlußabschnitt (14) und einen Verbindungsabschnitt (20) aufweist, und mit einem zweiten Steckverbinderteil (12), welches ebenfalls einen Anschlußabschnitt (28) und ein Verbindungsabschnitt (34) aufweist, wobei der Verbindungsabschnitt (34) eines (12) der Steckverbinderteile (10, 12) den Verbindungsabschnitt (20) des anderen (10) der Steckverbinderteile (10, 12) formschlüssig übergreift und zwischen den beiden Verbindungsabschnitten (20, 34) eine Dichtung (24) eingeordnet ist, dadurch gekennzeichnet, daß die Dichtung (24) in eine in Umfangsrichtung verlaufende Dichtungsnut (22) eines (10) der Verbindungsteile (10, 12) eingesetzt ist und daß sie im unbelasteten Zustand über die Dichtungsnut (22) übersteht, während sie beim Zusammenstecken der beiden Steckverbinderteile (10, 12) elastisch in radialer Richtung komprimiert wird.

2. Steckverbindung nach Anspruch 1, dadurch gekennzeichnet, daß die Dichtungsnut (22) in die Außenfläche des inneren Verbindungsabschnittes (20) eingearbeitet ist.

3. Steckverbindung nach Anspruch 1 oder 2, dadurch gekennzeichnet, daß der innere Verbindungsabschnitt (20) eine von der Dichtungsnut (22) axial in Richtung zum Anschlußabschnitt (14) beabstandete Verriegelungsnut (26) aufweist, in welche ein am anderen Verbindungsabschnitt (34) abgestütztes Verriegelungsteil (46) eingreift, welches vorzugsweise der Breite der Verriegelungsnut (26) entsprechende Dicke aufweist.

4. Steckverbindung nach Anspruch 3, dadurch gekennzeichnet, daß das Verriegelungsteil (46) zwei Verriegelungsarme (42) aufweist, die in die Verriegelungsnut (26) an diametral gegenüberliegenden Stellen eingreifen.

5. Steckverbindung nach Anspruch 4, dadurch gekennzeichnet, daß die beiden Verriegelungsarme (42) jeweils von einem Biegeabschnitt (44) des Verriegelungsteiles (46) getragen sind.

6. Steckverbindung nach Anspruch 5, dadurch gekennzeichnet, daß das Verriegelungsteil (46) einen nach außen weisenden Greifabschnitt (48) aufweist.

7. Steckverbindung nach Anspruch 5 oder 6, dadurch gekennzeichnet, daß die Verriegelungsarme (42) in Durchgängen (38, 40) des äußeren Verbindungsabschnittes (34) geführt sind.

8. Steckverbindung nach einem der Ansprüche 4 bis 7, dadurch gekennzeichnet, daß die radial innenliegenden Begrenzungsflächen (52) der Verriegelungsarme (42) eine der Krümmung des Bodens der Verriegelungsnut (26) entsprechende Krümmung haben, so daß die Verriegelungsarme (42) auf den gekrümmten Boden der Dichtungsnut (22) aufrastbar sind.

9. Fluid-Rohrleitungselement, dadurch gekennzeichnet, daß es zwei Steckverbinderteile (10, 12) nach einem der Ansprüche 1 bis 8 umfaßt, welche mit ihren Anschlußabschnitten (14, 28) mit einem Rohrstück (60; 64) verbunden sind.
